Europäisches Patentamt

European Patent Office

Office européen des brevets

(19)

(11) Numéro de publication: **0 208 585**
**B1**

(12) **FASCICULE DE BREVET EUROPEEN**

(45) Date de publication du fascicule du brevet: **29.08.90**

(51) Int. Cl.⁵: **C 08 L 33/10**

(21) Numéro de dépôt: **86401346.1**

(22) Date de dépôt: **19.06.86**

(54) **Composition modifiée de polymères thermoplastiques obtenus par polymérisation en masse.**

(30) Priorité: **28.06.85 FR 8509876**

(43) Date de publication de la demande:
**14.01.87 Bulletin 87/03**

(45) Mention de la délivrance du brevet:
**29.08.90 Bulletin 90/35**

(84) Etats contractants désignés:
**AT BE CH DE FR GB IT LI LU NL SE**

(56) Documents cités:
**FR-A-2 089 655**
**FR-A-2 557 573**

**Encyclopedia of Polymer Science and Technology (Vol. 1, p. 263-267)**

(73) Titulaire: **NORSOLOR**
**Tour Aurore Paris la Défense**
**F-92400 Courbevoie (FR)**

(72) Inventeur: **Paul, Jean-Michel**
**99 Ancienne Route Impériale**
**F-31120 Portet/Garonne (FR)**
Inventeur: **Cretenot, Claude-Lise**
**1 Rue de la Pinède**
**F-60550 Verneuil-en-Halatte (FR)**
Inventeur: **Vigouroux, Alain**
**24 Allée du Valois**
**F-60500 Chantilly (FR)**

(74) Mandataire: **Dubost, Thierry**
**c/o NORSOLOR Service Propriété Industrielle**
**B.P. 57**
**F-62670 Mazingarbe (FR)**

Courier Press, Leamington Spa, England.

# EP 0 208 585 B1

**Description**

Dans la fabrication de certains polymères thermoplastiques obtenus par polymérisation en masse, tels que notamment le polychlorure de vinyle, le polystyrène et le polyméthacrylate de méthyle, on est en permanence à la recherche d'agents de mise en oeuvre capables d'améliorer telle ou telle propriété de polymères. Dans le cas du polychlorure de vinyle par exemple, de tels agents de mise en oeuvre doivent être capables d'améliorer les performances au calendrage à vitesse élevée et en faibles épaisseurs, notamment pour la fabrication de feuilles d'emballage transparentes d'épaisseur comprise entre 100 et 800 µm.

Malheureusement les différentes solutions connues à ce jour se sont rélévées incapables d'atteindre des performances satisfaisantes pour le calendrage du polychlorure de vinyle à vitesse élevée et en faibles épaisseurs.

La présente invention vise une nouvelle approche du problème défini précédemment, approche spécialement adaptée au cas des polymères thermoplastiques obtenus par polymérisation en masse.

L'objet de la présente invention consiste donc en une composition modifiée de polymères thermoplastiques obtenus par polymérisation en masse, caractérisée en ce qu'elle comprend au moins une solution d'au moins un (co)polymère à base de méthacrylate d'alkyle, ledit (co)polymère comprenant:

(a) au moins 80% en poids de motifs dérivés d'au moins un méthacrylate d'alkyle, le groupe alkyle ayant de 4 à 10 atomes de carbone, et

(b) le cas échéant jusqu'à 20% en poids d'au moins un comonomère choisi parmi le méthacrylate de glycidyle, le styrène, le méthacrylate de benzyle, le méthacrylate d'allyle, le méthacrylate de tributylétain, le méthacrylate de trichloroéthyle, l'α-méthylstyrène, les vinyltoluènes.

Pour l'obtention de polymères thermoplastiques modifiés ayant d'excellentes propriétés, les compositions selon l'invention se sont rélévées préférables à des compositions comprenant un prépolymère, lequel se présente sous forme d'une solution de (co)polymère dans son (ses) monomère(s) constitutif(s). En effet il apparaît que le(s) monomère(s) libre(s) du prépolymère peuvent copolymériser avec le monomère du polymère thermoplastique à modifier (chlorure de vinyl, styrène, etc.), les copolymères ainsi formés étant susceptibles de jouer un rôle négatif sur les propriétés du système.

Pour l'application visée par la présente invention, il est souhaitable que la viscosité Brookfield 100 tours/min. à 20°C de la solution de (co)polymère soit comprise entre 0,2 et 3,5 Pa · s.

Le procédé de fabrication du (co)polymère décrit précédemment, comprend la (co)polymérisation, en présence d'au moins un initiateur de radicaux libres et d'au moins un solvant, de (a) au moins 80% en poids d'au moins un méthacrylate d'alkyle, le groupe alkyle ayant de 4 à 10 atomes de carbone et de (b) le cas échéant jusqu'à 20% en poids d'au moins un comonomère choisi parmi le méthacrylate de glycidyle, le styrène, le méthacrylate de benzyle, le méthacrylate d'allyle, le méthacrylate de tributylétain, le méthacrylate de trichloroéthyle, l'α-méthylstyrène, les vinyltoluènes, à une température comprise entre 50° et 95°C et pendant une durée supérieure ou égale à 2 heures, suivie de refroidissement jusqu'à une température inférieure ou égale à 30°C. Les initiateurs de radicaux libres utilisables pour la polymérisation des méthacrylates d'alkyle en présence, le cas échéant, du (des) comonomère(s) sont bien connus. Il s'agit en particulier des composés azoïques, tels que l'azobisisobutyronitrile, et des peroxydes organiques, tels que le peroxyde de benzoyle. Ces initiateurs sont utilisés à raison de jusqu'à 0,5% en poids par rapport à l'ensemble des monomères présents. La (co)polymérisation peut être effectuée en présence d'au moins un agent de transfert de chaîne tel que notamment le laurylmercaptan, le terdodécylmercaptan, le décylmercaptan, le méthanol, l'alcool isopropylique. Ces agents de transfert de chaîne sont généralement utilisés à raison de jusqu'à 0,3% en poids par rapport à l'ensemble des monomères présents. Un inhibiteur choisi parmi la phénothiazine, le butylhydroxytoluène, l'hydroquinone et l'éther monométhylique de l'hydroquinone peut le cas échéant être ajouté à la fin du processus à raison de jusqu'à 0,02% en poids par rapport à l'ensemble des monomères présents.

Le solvant utilisé doit être:

— suffisamment volatil pour être éliminé lors du strippage du monomère résiduel présent dans le polymère thermoplastique à modifier,

— dans le cas de la modification du polychlorure de vinyle, soluble dans l'eau afin de pouvoir être séparé du chlorure de vinyle lors du lavage à l'eau du chlorure de vinyl strippé.

Des exemples de tels solvants sont notamment l'acétate d'éthyle, la méthyl éthyl cétone, le dioxane et le tétrahydrofuranne.

Dans le cadre du procédé on observe qu'une durée de réaction d'au moins 2 heures est nécessaire pour obtenir une (co)polymérisation complète du(des) monomère(s) présents.

Les polymères thermoplastiques obtenus par polymérisation en masse qui conviennent selon la présente invention sont notamment le polychlorure de vinyl, le polystyrène et le polyméthacrylate de méthyle.

Les exemples suivants illustrent différents modes de réalisation de la présente invention.

Exemple 1 à 3

Dans un réacteur de 1000 cm$^3$ de capacité utile, à double enveloppe, surmonté d'un réfrigérant à boules, on introduit 400 g d'acétate d'éthyle puis 400 g de(s) monomère(s). Ce mélange est chauffé

2

progressivement jusqu'à la température T (exprimée en degrés Celsius) tout en homogénéisant le milieu réactionnel à l'aide d'un agitateur mécanique. Lorsque cette température est atteinte on ajoute dans le réacteur l'initiateur de radicaux libres constitué par un mélange d'azobisisobutyronitrile (ADIB), purifié par recristallisation dans l'éthanol, et de peroxyde de benzoyle (en abrégé PB), leurs proportions étant comptées par rapport à l'ensemble des monomères et exprimées en % en poids.

La température est maintenue pendant une durée t (exprimée en minutes). A l'issue de ce temps, on refroidit le milieu réactionnel jusqu'à la température de 20°C, on mesure sa viscosité Brookfield $\eta$ à tours/min. (exprimée en Pa · s).

Le tableau ci-dessous indique, outre les proportions d'initiateurs, la température T et la durée t, la viscosité $\eta$ définie précédemment.

Le(s) monomère(s) utilisé(s) sont les suivants:
— pour l'exemple 1, une mélange de 90% en poids de méthacrylate de butyle et 10% en poids de styrène,
— pour l'exemple 2, un mélange de 95% en poids de méthacrylate de butyle et 5% en poids de méthacrylate de glycidyle,
— pour l'exemple 3, du méthacrylate de butyle seul.

TABLEAU

| Exemple | ADIB | PB | T | t | $\eta$ |
|---------|------|------|-----|-----|-----|
| 1 | 0,2 | 0,05 | 83 | 600 | 2,5 |
| 2 | 0,1 | 0,05 | 80 | 405 | 2,8 |
| 3 | 0,1 | 0,1 | 80 | 375 | 0,6 |

Les copolymères ainsi préparés one été utilisés pour modifier du polychlorure de vinyle obtenu par polymérisation en masse. Le produit obtenu est apte à la fabrication de feuilles minces et transparentes à des vitesses de calendrage élevées.

## Revendications

1. Composition modifiée de polymère thermoplastique obtenu par polymérisation en masse, caractérisée en ce qu'elle comprend au moins une solution d'au moins un (co)polymère à base de méthacrylate d'alkyle, ledit (co)polymère comprenant:
   (a) au moins 80% en poids de motifs dérivés d'au moins un méthacrylate d'alkyle, le groupe alkyle ayant de 4 à 10 atomes de carbone, et
   (b) le cas échéant jusqu'à 20% en poids d'au moins un comonomère choisi parmi le méthacrylate de glycidyle, le styrène, le méthacrylate de benzyle, le méthacrylate d'allyle, le méthacrylate de tributylétain, le méthacrylate de trichloroéthyle, l'α-méthylstyrène, les vinyltoluènes.

2. Composition selon la revendication 1, caractérisée en ce que la viscosité Brookfield à 100 tours/min, à 20°C de la solution de (co)polymère est comprise entre 0,2 et 3,5 Pa · s.

3. Composition selon l'une des revendications 1 et 2, caractérisée en ce que le polymère thermoplastique obtenu par polymérisation en masse est choisi parmi le polychlorure de vinyle, le polystyrène et le polyméthacrylate de méthyle.

4. Feuille mince et transparente obtenue à partir d'une composition modifiée selon l'une des revendications 1 à 3.

## Patentansprüche

1. Durch Massepolymerisation erhaltene modifizierte Thermoplastpolymerzusammensetzung, dadurch gekennzeichnet, daß sie mindestens eine Lösung mindestens eines (Co)polymers auf Alkylmethacrylatbasis enthält, wobei das (Co)polymer enthält:
   (a) mindestens 80 Gew.-% an von einem Alkylmethacrylat abstammenden Einheiten, wobei die Alkylgruppe 4 bis 10 Kohlenstoffatome aufweist, und
   (b) gegebenenfalls bis zu 20 Gew.-% mindestens eines Comonomers, das ausgewählt ist aus der Gruppe bestehend aus Glycidylmethacrylat, Styrol, Benzylmethacrylat, Allylmethacrylat, Tributylzinnmethacrylat, Trichloräthylmethacrylat, α-Methylstyrol und den Vinyltoluolen.

2. Zusammensetzung nach Anspruch 1, dadurch gekennzeichnet, daß die Brookfield-Viskosität des (Co)polymers bei 100 U/min und bei 20°C zwischen 0,2 und 3,5 Pa · s beträgt.

3. Zusammensetzung nach Anspruch 1 oder 2, dadurch gekennzeichnet, daß das durch Massepolymerisation erhaltene Thermoplastpolymer ausgewählt ist aus der Gruppe bestehend aus Polyvinylchlorid, Polystyrol und Polymethylmethacrylat.

4. Dünner transparenter Film, erhalten aus einer modifizierten Zusammensetzung nach einem der Ansprüche 1 bis 3.

**Claims**

1. Modified composition of a thermoplastic polymer obtained by bulk polymerization, characterized in that it comprises at least one solution of at least one (co)polymer based on alkyl methacrylate, the said (co)polymer comprising:

(a) at least 80% by weight of units derived from at least one alkyl methacrylate, the alkyl group containing from 4 to 10 carbon atoms, and

(b) if appropriate, up to 20% by weight of at least one comonomer chosen from glycidyl methacrylate, styrene, benzyl methacrylate, allyl methacrylate, tributyltin methacrylate, trichloroethyl methacrylate, α-methylstyrene and vinyltoluenes.

2. Composition according to Claim 1, characterized in that the Brookfield viscosity at 100 revolutions/min, at 20°C, of the solution of (co)polymer is between 0.2 and 3.5 Pa · s.

3. Composition according to one of Claims 1 and 2, characterized in that the thermoplastic polymer obtained by bulk polymerization is chosen from polyvinyl chloride, polystyrene and polymethyl methacrylate.

4. Thin and transparent sheet obtained from a modified composition according to one of Claims 1 to 3.